# EUROPÄISCHE PATENTSCHRIFT

(11) **EP 2 217 977 B1**
(45) Veröffentlichungstag und Bekanntmachung des Hinweises auf die Patenterteilung: **04.04.2012**
(21) Anmeldenummer: 08852598.5
(22) Anmeldetag: 18.11.2008
(51) Int. Cl.: G05B 19/05

(54) **AUTOMATISIERUNGSSYSTEM UND STEUERUNGSVORRICHTUNG ZUM IDENTIFIZIEREN EINES ANSCHLUSSELEMENTES**
AUTOMATED SYSTEM AND CONTROL DEVICE FOR IDENTIFYING A CONNECTING ELEMENT
SYSTÈME D'AUTOMATISATION ET DISPOSITIF DE COMMANDE POUR IDENTIFIER UN ÉLÉMENT DE CONNEXION

(30) Priorität: 20.11.2007 DE 102007055613
(43) Veröffentlichungstag der Anmeldung: 18.08.2010
(73) Patentinhaber: Phoenix Contact GmbH & Co. KG, 32825 Blomberg (DE)
(72) Erfinder: LOHRE, Hubertus, 32839 Steinheim (DE); JOESTINGMEIER, Norbert, 32657 Lemgo (DE)
(74) Vertreter: Kampfenkel, Klaus
(86) Internationale Anmeldenummer: PCT/EP2008/009744
(87) Internationale Veröffentlichungsnummer: WO 2009/065554

(56) Entgegenhaltungen:
- EP-A- 0 838 739
- EP-A- 1 832 944
- US-A- 4 616 306

## Beschreibung

Die vorliegende Erfindung betrifft allgemein das Gebiet der industriellen Automatisierungstechnik und insbesondere ein Automatisierungssystem zum Kennzeichnen, d. h. zum Identifizieren wenigstens einer Gruppe von Anschlusselementen innerhalb eines an ein Kommunikationsnetz angeschalteten modularen Busteilnehmers. Ferner betrifft die Erfindung eine Steuerungsvorrichtung zum Identifizieren wenigstens einer Gruppe von Anschlusselementen

In der industriellen Automatisierungstechnik werden schon seit längerem Feldbussysteme wie zum Beispiel der Interbus oder der Profibus eingesetzt. Über einen Feldbus sind zum Beispiel eine programmierbare Steuereinrichtung und mehrere Busteilnehmer miteinander verbunden. Prozessdaten werden in Abhängigkeit der Wichtigkeit zyklisch oder azyklisch zwischen der Steuereinrichtung und den Busteilnehmern ausgetauscht. Prozessdaten können I/O-Daten, Diagnosedaten und dergleichen darstellen. Ein Busteilnehmer kann eine Anschaltbaugruppe sein, an die mehrere Sensoren und Aktoren angeschlossen werden können.

Derartige Feldbussysteme werden immer komplexer und leistungsfähiger, was sich unter Anderem in den immer kleiner werdenden Gehäuseabmessungen der Busteilnehmer bei gleichzeitiger Zunahme der Anschlussmöglichkeiten von Sensoren und Aktoren zeigt.

In EP 1 832 944-A1, welches den Oberbegriff des unabhängigen Anspruchs 1 und 6 bildet, ist eine Baugruppe offenbart, bei der Informationen über den aktuellen Zustand in Verbindung mit einer absoluten Adresse in Klartext und/oder Symbolen angezeigt werden. Somit wird eine eindeutige Beziehung zwischen den Anwendern und der Baugruppe bzw. dem System für Wartungszwecke ermöglicht.

Der vorliegenden Erfindung liegt die Aufgabe zugrunde, ein Automatisierungssystem zu schaffen, welches einer Bedienperson ermöglicht, in einfacher und schneller Weise während der Inbetriebnahme und/oder Wartung eines Automatisierungssystems eine Verdrahtungskontrolle durchzuführen und fehlerhafte oder Komponenten, die ausgetauscht werden sollen, schneller aufzufinden, und zwar ohne Kenntnis des gesamten Prozessabbildes.

An dieser Stelle sei angemerkt, dass bei einer Verdrahtungskontrolle geprüft wird, ob die von einer Steuereinrichtung zu einer bestimmten Komponente übertragenen Signale auch tatsächlich dort ankommen.

Dieses technische Problem wird durch ein Automatisierungssystem gelöst, welches ein Kommunikationsnetz, eine programmierbare Steuereinrichtung und wenigstens einen modularen Busteilnehmer aufweist, die mit dem Kommunikationsnetz verbunden sind. Angemerkt sei an dieser Stelle, dass es sich bei dem Kommunikationsnetz um irgendein Busssystem, beispielsweise einen Feldbus gemäß dem Interbus oder dem Profibus handeln kann. Der wenigstens eine modulare Busteilnehmer weist mehrere Gruppen von Anschlusselementen, welche auch Klemmkontakte sein können, auf. Jeder Gruppe von Anschlusselementen ist ein Anzeigeelement zugeordnet. Als Anzeigeelement kann eine Leuchtdiode verwendet werden. Je nach Implementierung des Busteilnehmers kann an jeder Gruppe von Anschlusselementen ein Sensor oder Aktor angeschlossen werden. Weiterhin weist der wenigstens eine modulare Busteilnehmer eine Auswerte-und Ansteuereinrichtung auf, die unter Ansprechen auf eine von der programmierbaren Steuereinrichtung kommenden Signalisierungsinformation wenigstens ein ausgewähltes Anzeigeelement ansteuert. Hierzu ist die programmierbare Steuereinrichtung zum Bereitstellen einer entsprechenden Signalisierungsinformation ausgebildet.

Angemerkt sei, dass die Signalsierungsinformation ein Steuersignal zum Ansteuern wenigstens eines ausgewählten Anzeigeelements enthalten kann. Weiterhin sei angemerkt, dass das Merkmal "Gruppe von Anschlusselementen" auch den Fall erfassen soll, dass lediglich ein einziges Anschlusselement vorhanden ist.

Vorteilhafte Weiterbildungen sind Gegenstand der Unteransprüche.

Um gezielt ein Anzeigeelement ansteuern zu können, enthält die Signalisierungsinformation eine Angabe über die Adresse wenigstens einer Gruppe von Anschlusselementen und/oder den Anschlussort der jeweiligen Gruppe von Anschlusselementen innerhalb des Kommunikationsnetzes. Die Adresse der Gruppe von Anschlusselementen kann eine fortlaufende Nummer sein. Insbesondere beim Interbus kann eine Adressierung der Busteilnehmer entfallen, da der programmierbaren Steuereinrichtung die physikalischen Einbauorte der Busteilnehmer bekannt sind.

Angemerkt sei an dieser Stelle, dass die programmierbare Steuereinrichtung entweder für jedes anzusteuernde Anzeigeelement eine separate Signalisierungsinformation bereitstellen oder die entsprechenden Steuerdaten zur Ansteuerung mehrerer Anzeigeelemente in einer einzigen Signalisierungsinformation übertragen kann.

Der modulare Busteilnehmer enthält mehrere Kommunikationsklemmen, die jeweils wenigstens eine Gruppe von Anschlusselementen aufweisen. Bei den Kommunikationsklemmen kann es sich um sogenannte Inline-Klemmen, wie zum Beispiel vom Typ IL TEMP 4/8 RTD EF handeln.

In diesem Fall kann die Signalisierungsinformation ferner eine Angabe über die Adresse und/oder den Einbauort des modularen Busteilnehmers, die Adresse und/oder den Einbauort der jeweiligen Kommunikationsklemme innerhalb des Busteilnehmers enthalten.

Zweckmäßigerweise stellt die programmierbare Steuereinrichtung unter Ansprechen auf ein vorbestimmtes Ereignis eine Signalisierungsinformation bereit. Ein vorbestimmtes Ereignis kann eine Fehlermeldung sein, die beispielsweise von dem wenigstens einen Busteilnehmer zur Steuerinrichtung übertragen wird, eine Eingabe der Adresse eines oder mehrerer anzusteuernder Anzeigeelemente an der Steuereinrichtung sein.

Vorteilhafterweise sorgt die Auswerte- und Ansteuereinrichtung des Busteilnehmers dafür, dass ein aktiviertes Anzeigeelement mit einer vorbestimmten Blinkfrequenz blinkt. Die Blinkfrequenz kann in Abhängigkeit des vorbestimmten Ereignisses gewählt werden. Beispielsweise kann bei Auftritt eines Fehlers das entsprechende Anzeigeelement mit einer erhöhten Blinkfrequenz blinken, um auf einen kritischen Zustand hinzuweisen.

Der Busteilnehmer oder die ihm zugeordneten Gruppen von Anschlusselementen werden jeweils in der Regel durch eine Adresse oder Variable dargestellt. Während der Konfigurationsphase ordnet eine Bedienperson jedem Busteilnehmer oder jeder Gruppe von Anschlusselementen die für ihn bestimmten Peripheriesignale, zum Beispiel Parameter, Informations (z. B. I/O-Signale)-, Steuer-und/oder Befehlssignale, unter Verwendung der jeweiligen Adresse oder Variablen zu. Die so erstellte Zuordnungstabelle wird in der Steuereinrichtung selbst abgelegt oder von einer separaten Einrichtung bereitgestellt und im Bedarfsfall der Steuereinrichtung übergeben. Solche Zuordnungstabellen können Fehler enthalten, die auch als Verdrahtungsfehler bezeichnet werden können. Mögliche Verdrahtungsfehler werden während einer Verdrahtungskontrolle gesucht.

Um zu verhindern, dass es insbesondere während einer Verdrahtungskontrolle zu einer Gefährdung des Personals kommt, ist die Auswerte- und Ansteuerungseinrichtung derart ausgebildet, dass sie unter Ansprechen auf die Signalisierungsinformation die dem wenigstens einen ausgewählten Anzeigeelement zugeordnete Gruppe von Anschlusselementen sperrt. Unter Sperren ist ein Zustand zu verstehen, bei dem keine Daten, gleich welcher Art, von oder zum dem an die Gruppe von Anschlusselementen angeschalteten Aktor oder Sensor übertragen werden können. Mit anderen Worten veranlasst die Signalisierungsinformation die Auswerte- und Steuereungseinrichtung, dass entweder der gesamte Busteilnehmer und somit alle Gruppen von Anschlusselementen oder nur bestimmte, d. h. vorbestimmte Gruppen von Anschlusselementen des Busteilnehmers in einen sogenannten Testmodus versetzt werden. Während des Testmodus ist die Verbindung des Datenkanals zu der jeweiligen Gruppe von Anschlusselementen unterbrochen. In diesem Fall wird lediglich das der jeweiligen Gruppe von Anschlusselementen zugeordnete Anzeigelement angesteuert. Auf diese Weise ist sichergestellt, dass die Verdrahtung, d. h. Zuordnung von Signalen zu einer bestimmten Gruppe von Anschlusselementen nicht über das direkte Ansteuern der daran angeschlossenen Last (Aktor oder Sensor) überprüft werden muss. In einem solchen Fall könnte es nämlich zu einer Gefährdung des Personals kommen, wenn zum Beispiel durch eine fehlerhafte Zuordnungstabelle ein falsch adressierter Aktor, wie zum Beispiel ein Industrieroboter, aktiviert wird. Der Testmodus kann zum Beispiel durch ein weiteres Steuersignal von der Steuereinrichtung wieder beendet werden. Dazu kann die Auswerte- und Steuereinrichtung derart ausgebildet sein, dass sie das Anzeigeelement deaktiviert und die Verbindung zu der jeweiligen Gruppe von Anschlusseementen wieder herstellt.

Ein Vorteil des Automatisierungssystem ist somit darin zusehen, dass Anschlussklemmen gezielt gesucht werden können, ohne eine daran angeschlossene Last (Aktor, Sensor) ansteuern zu müssen.

Das oben genannte technische Problem wird ebenfalls durch die Merkmale des Anspruchs 7 gelöst.

Danach ist eine Steuerungsvorrichtung vorgesehen, die eine programmierbare Steuereinheit und einen internen Kommunikationsbus aufweist. Mit dem Kommunikationsbus sind mehrere Gruppen von Anschlusselementen zum Anschließen externer Komponenten verbunden. Jeder Gruppe von Anschlusselementen ist ein Anzeigeelement zugeordnet. Ferner weist die Steuerungsvorrichtung eine Auswerte- und Steuereinrichtung aufweist, die unter Ansprechen auf ein von der programmierbaren Steuereinheit geliefertes Steuersignal wenigstens ein Anzeigelement ansteuert und die diesem Anzeigelement zugeordnete Gruppe von Anschlusselementen sperrt.

Auf diese Weise ermöglicht die Steuerungsvorrichtung, dass eine oder mehrere Gruppen von Anschlusselementen, auch gleichzeitig, gezielt gesucht werden können, ohne eine an die Anschlusselemente angeschlossene Last (Aktor, Sensor) ansteuern zu müssen.

Gemäß einer alternativen Implementierung können die programmierbare Steuereinheit und die Auswerte- und Steuereinrichtung eine Funktionseinheit bilden.

Die Erfindung wird nachfolgend anhand von zwei Ausführungsbeispielen in Verbindung mit den beiliegenden Zeichnungen näher erläutert. Gezeigt werden in
- Fig. 1: ein Automatisierungssystem, in dem die Erfindung verwirklicht ist, und in
- Fig. 2: eine speicherprogrammierbare Steuereinrichtung mit Mitteln zur Durchführung einer Verdrahtungsüberprüfung ohne Ansteuerung der Anschlusselemente.

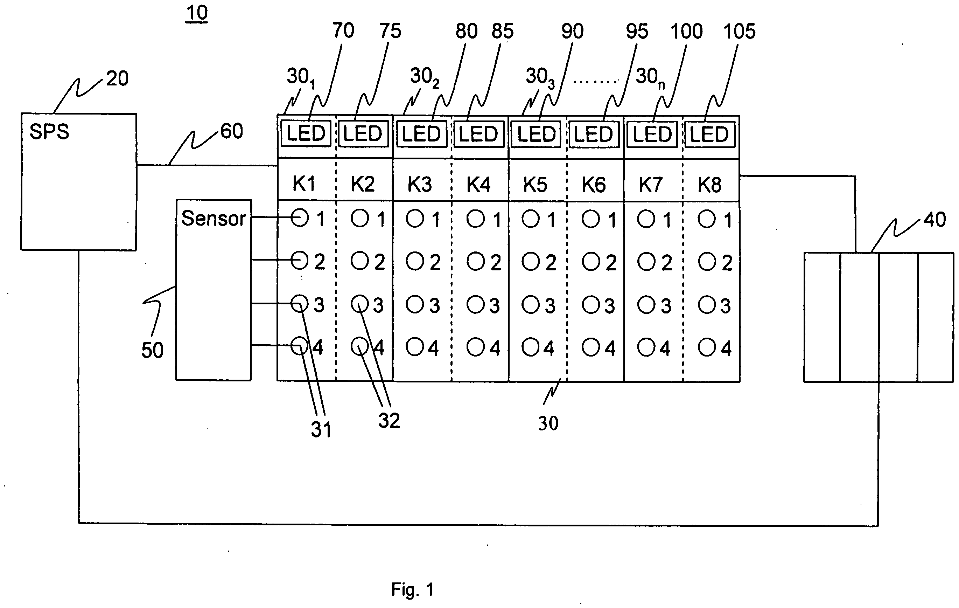

Fig. 1 zeigt beispielhaft ein Automatisierungssystem 10, welches einen ringförmigen Feldbus 60 aufweist, über den eine programmierbare Steuereinrichtung (SPS) 20 mit beispielsweise zwei Busteilnehmern 30 und 40 kommunizieren kann. Jeder Busteilnehmer ist modular aufgebaut und weist mehrerer Anschlussklemmen auf. Der einfachen Darstellung wegen ist lediglich der Busteilnehmer 30 detaillierter dargestellt. Der Busteilnehmer 30 ist modular aufgebaut und weist n parallel angeordnete Anschlussklemmen 30₁ - 30ₙ auf. Im vorliegenden Beispiel weisen die beiden Busteilnehmer 30 und 40 jeweils vier Anschlussklemmen auf. Jede Anschlussklemme weist wiederum zwei Gruppen von Klemmkontakten auf. Die Anschlussklemme 30₁ enthält eine erste Gruppe K1 von Klemmkontakten 31 sowie eine zweite Gruppe K2 von Klemmkontakten 32. Im Fachjargon wird die Gruppe von Klemmkontakten auch als Kanal bezeichnet. So ist der Gruppe K1 von Klemmkontakten, nachfolgend kurz Kanal K1 genannt, eine Leuchtdiode 70 zugeordnet, während dem Kanal K2 eine Leuchtdiode 75 zugeordnet ist. Die weiteren Anschlussklemmen 30₂, 30₃ und 30ₙ sind in ähnlicher Weise aufgebaut. So weist die Anschlussklemme 30₂ zwei Kanäle K3 und K4 auf, welche jeweils eine Gruppe von vier Klemmkontakten enthalten. Dem Kanal K3 ist wiederum eine Leuchtdiode 80 zugeordnet, während dem Kanal K4 eine Leuchtdiode 85 zugewiesen ist. Die Anschlussklemme 30₃ weist zwei Kanäle K5 und K6 auf, die jeweils eine Gruppe von vier Klemmkontakten darstellen. Dem Kanal K5 ist eine Leuchtdiode 90 zugeordnet, während dem Kanal K6 eine Leuchtdiode 95 zugeordnet ist. Die Anschlussklemme 30ₙ weist ebenfalls zwei Kanäle K7 und K8 auf, die jeweils wieder eine Gruppe von vier Klemmkontakten darstellen. Dem Kanal K7 ist eine Leuchtdiode 100 zugeordnet, während dem Kanal K8 eine Leuchtdiode 105 zugeordnet ist. Lediglich der einfachen Darstellung wegen ist nur an den Kanal K1 der Anschlussklemmen 30₁ ein Sensor 50 angeschlossen. Üblicherweise sind die Klemmkontakte der nicht benutzten Kanäle 2 bis 8 überbrückt, um keine Störsignale zu verursachen. Die Stromversorgung der am Kommunikationsnetz 60 angeschlossenen Komponenten kann über das Kommunikationsnetz 60, einen separaten Energieversorgungsbus oder durch jeweils eine lokale Energieversorgungseinrichtung erfolgen.

Die Busteilnehmer 30 und 40 weisen weiterhin jeweils eine Auswerte- und Ansteuerungseinrichtung auf, die nicht dargestellt ist. Die Auswerte- und Ansteuerungseinrichtung kann von der programmierbaren Steuereinrichtung 20 eine Signalisierungsinformation empfangen, die Angaben darüber enthält, welche der Leuchtdioden aktiviert oder deaktiviert werden sollen.

Nachfolgend wird die Funktionsweise des in der Figur dargestellten Automatisierungssystems 10 näher erläutert.

Bei einem ersten Szenario sei angenommen sei, dass der am Kanal 1 des Busteilnehmers 30 angeschlossene Sensor 50 ausgetauscht werden soll. Um einen schnellen und fehlerfreien Austausch durch das Wartungspersonal zu erreichen, erzeugt die programmierbare Steuereinrichtung 20 unter Ansprechen auf das Ereignis, dass der Sensor 50 ausgewechselt werden soll, eine Signalisierungsinformation, die den Kanal 1 des Busteilnehmers 30 identifiziert. Dieses Ereignis kann auch die Eingabe der Adresse des Kanals 1 an der Steuereinrichtung 20 betreffen. Die erzeugte Signalisierungsinformation kann die Adresse des Busteilnehmers 30 sowie die Nummer oder die Adresse des Kanals K1 enthalten. Je nach Implementierung des Automatisierungssystems kann die Signalisierungsinformation zusammen mit Prozessdaten von der programmierbaren Steuereinrichtung 20 über den Feldbus 60 zum Busteilnehmer 30 übertragen werden. Alternativ kann die Signalisierungsinformation auch während eines separaten Signalisierungszyklus übertragen werden. Die übertragenen Signalisierungsinformationen gelangen dann zur Auswerte-und Ansteuerungseinrichtung des Busteilnehmers 30. Unter Ansprechen auf die Signalisierungsinformation erkennt die Auswerte- und Ansteuerungseinrichtung, dass die dem Kanal K1 zugeordnete Leuchtdiode 70 angesteuert werden soll. Gemäß einer vorteilhaften Ausgestaltung blinkt die Leuchtdiode 70 mit einer vorbestimmten Blinkfrequenz.

Der Busteilnehmer 30 kann derart ausgebildet sein, dass ein Austauschen des Sensors 50 an den Klemmkontakten 31 erfasst werden kann. Sobald das Trennen des Sensors 50 und/oder das Anschließen eines neuen Sensors an den Klemmkontakten 31 erkannt worden ist, sorgt die Auswerte- und Ansteuerungseinrichtung dafür, dass die Leuchtdiode 70 wieder deaktiviert wird. Alternativ kann auch die programmierbare Steuereinrichtung 20 eine weitere Signalisierungsinformation zum Busteilnehmer 30 übertragen, die einen Deaktivierungshinweis enthält. Unter Ansprechen auf diese Signalisierungsinformation sorgt die Auswerte-und Ansteuereinrichtung dafür, das die LED 70 abgeschaltet wird.

Bei einem zweiten Szenario kann der Busteilnehmer 30 der programmierbaren Steuereinrichtung 20 beispielsweise Fehler hinsichtlich der Kanäle K3 und K4 signalisieren. Daraufhin erzeugt die programmierbare Steuereinrichtung 20 eine Signalisierungsinformation, die die Adressen oder Nummern der Kanäle K3 und'K4 sowie eine Identifizierung des Busteilnehmers 3 enthält. Die Signalisierungsinformation wird wiederum in der Auswerte- und Ansteuerungseinrichtung des Busteilnehmers erkannt. Unter Ansprechen auf die empfangene Signalisierungsinformation veranlasst die Auswerte- und Ansteuerungseinrichtung, dass die Leuchtdioden 80 und 85, die dem Kanal K3 beziehungsweise dem Kanal K4 zugeordnet sind, aktiviert werden.

Dank des Signalisierungsmechanismus kann das Wartungspersonal gezielt vor Ort darüber informiert werden, an welchen Klemmkontakten eine Maßnahme zu ergreifen ist. Es ist nicht erforderlich, dass das Wartungspersonal vor Ort einen Computer benötigt, der das komplette Automatisierungssystem abbildet. Ein Operator kann somit gezielt an der entfernt von den Busteilnehmern 30 und 40 aufgestellten programmierbaren Steuereinrichtung 20 Signalisierungsinformationen erzeugen, die dem Wartungspersonal an den entfernten Busteilnehmern anzeigen, an welcher Stelle er eingreifen muss.

Die Deaktivierung einer Leuchtdiode kann auch durch eine weitere von der programmierbaren Steuereinrichtung 20 erzeugten Signalisierungsinformation gezielt gesteuert werden. Beispielsweise kann, wenn das Automatisierungssystem 10 erfolgreich in Betrieb genommen worden ist, die programmierbare Steuereinrichtung 20 eine entsprechende Signalisierungsinformation über den Feldbus 60 zu den Busteilnehmern 30 und 40 weiterleiten. Unter Ansprechen auf die empfangene Signalisierungsinformation deaktiviert die Auswerte- und Ansteuerungseinrichtung alle Leuchtdioden.

In einem nicht dargestellten Speicher der SPS 20 kann eine von dem Anwender erstellte Zuordnungstabelle hinterlegt sein. In einer solchen Tabelle ist zum Beispiel angegeben, welcher Komponententyp an welcher Gruppe von Anschlusselementen angeschlossen ist oder angeschlossen werden kann und welche Peripheriesignale für welche Gruppe von Anschlusselementen und somit für welche Komponenten vorgesehen sind. Darüber hinaus kann jeder Gruppe von Anschlusselementen und/oder der daran angeschalteten Komponente eine Variable, d. h. Adresse zugeordnet sein.

Zur Durchführung einer Verdrahtungskontrolle, d. h. einer Überprüfung der Zuordnungstabelle, wählt der Anwender den Betriebsmodus "Verdrahtungskontrolle" aus und gibt wenigstens eine Variable ein, welche überprüft werden soll. Unter Ansprechen auf den gewählten Betriebsmodus "Verdrahtungskontrolle" und die eingegebenen Variablen erzeugt die SPS 20 ein oder mehrere Steuersignale. Die Steuersignale können zyklisch mit oder ohne Prozessdaten oder azyklisch über das Kommunikationsnetz 60 zur Auswerte-und Steuereinrichtung des Busteilnehmers 30 und/oder 40 übertragen werden. Die Auswerte- und Steuereinrichtung wertet die ankommenden Steuersignale aus und veranlasst, dass die entsprechende Leuchtdiode oder entsprechenden Leuchtdioden aktiviert werden. Gleichzeitig sorgt die Auswerte- und Steuereinrichtung dafür, dass keine Signale mehr über die Gruppe von Anschlusselementen, welche der aktivierten Leuchtdiode zugeordnet ist, übertragen werden können. Wird beispielsweise durch das Steuersignal nur Kanal 1 adressiert, wird lediglich die Leuchtdiode 70 angesteuert und die Verbindung zwischen dem Sensor 50 und dem Datenkanal des Kommunikationsnetz 60 unterbrochen.

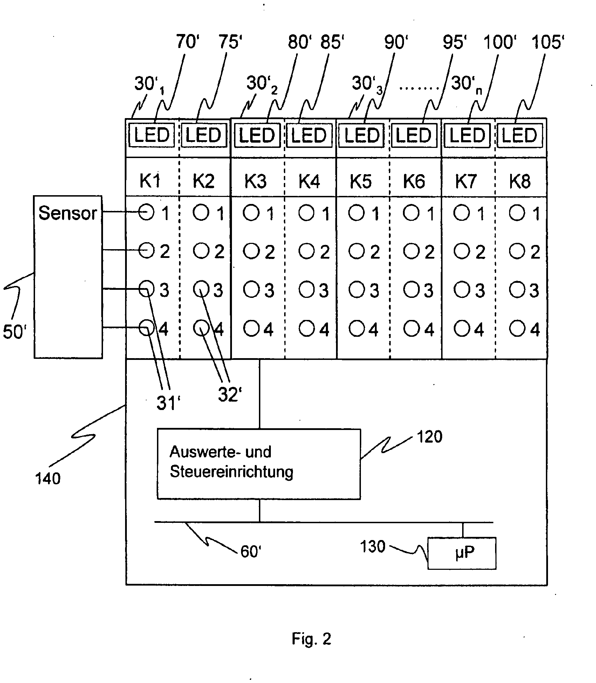

Fig. 2 zeigt als Steuerungsvorrichtung eine speicherprogrammierbare Steuereinrichtung 140, kurz SPS genannt. Die SPS 140 weist einen internen, an sich bekannten Bus 60' auf, an den ein Mikroprozessor 130, eine Auswerte- und Steuereinrichtung 120 und wenigstens eine Anschlussklemme angeschlossen sind. Im vorliegenden Beispiel sind vier Anschlussklemmen 30'₁ bis 30'ₙ vorgesehen. Jede Anschlussklemme weist wiederum zwei Gruppen von Klemmkontakten auf. Die Anschlussklemme 30'₁ enthält eine erste Gruppe K1 von Klemmkontakten 31' sowie eine zweite Gruppe K2 von Klemmkontakten 32'. Im Fachjargon wird die Gruppe von Klemmkontakten auch als Kanal bezeichnet. So ist der Gruppe K1 von Klemmkontakten, nachfolgend kurz Kanal K1 genannt, eine Leuchtdiode 70' zugeordnet, während dem Kanal K2 eine Leuchtdiode 75' zugeordnet ist. Die weiteren Anschlussklemmen 30'₂, 30'₃ und 30'ₙ sind in ähnlicher Weise aufgebaut. So weist die Anschlussklemme 30'₂ zwei Kanäle K3 und K4 auf, welche jeweils eine Gruppe von vier Klemmkontakten enthalten. Dem Kanal K3 ist wiederum eine Leuchtdiode 80' zugeordnet, während dem Kanal K4 eine Leuchtdiode 85' zugewiesen ist. Die Anschlussklemme 30'₃ weist zwei Kanäle K5 und K6 auf, die jeweils eine Gruppe von vier Klemmkontakten darstellen. Dem Kanal K5 ist eine Leuchtdiode 90' zugeordnet, während dem Kanal K6 eine Leuchtdiode 95' zugeordnet ist. Die Anschlussklemme 30'ₙ weist ebenfalls zwei Kanäle K7 und K8 auf, die jeweils wieder eine Gruppe von vier Klemmkontakten darstellen. Dem Kanal K7 ist eine Leuchtdiode 100' zugeordnet, während dem Kanal K8 eine Leuchtdiode 105' zugeordnet ist. Lediglich der einfachen Darstellung wegen ist nur an den Kanal K1 der Anschlussklemmen 30'₁ ein externer Sensor 50' angeschlossen. Üblicherweise sind die Klemmkontakte der nicht benutzten Kanäle 2 bis 8 überbrückt, um keine Störsignale zu verursachen.

Die Auswerte- und Ansteuerungseinrichtung 120 kann von dem Mikroprozessor 130 ein Steuersignal empfangen, das Angaben darüber enthält, welche der Leuchtdioden aktiviert werden sollen und welche Gruppe(n) von Anschlusselementen gesperrt werden sollen, so dass keine Daten mehr, gleich welcher Art, über die gesperrten Anschlusselemente übertragen werden können.

In einem nicht dargestellten Speicher kann eine von dem Anwender erstellte Zuordnungstabelle hinterlegt sein. In einer solchen Tabelle ist zum Beispiel angegeben, welcher Komponententyp an welcher Gruppe von Anschlusselementen angeschlossen ist oder angeschlossen werden soll und welche Signale für welche Gruppe von Anschlusselementen vorgesehen sind. Darüber hinaus kann jeder Gruppe von Anschlusselementen und/oder der daran angeschalteten Komponente eine Variable, d. h. Adresse zugeordnet sein.

Zur Durchführung einer Verdrahtungskontrolle, d. h. einer Überprüfung der Zuordnungstabelle, wählt der Anwender den Betriebsmodus "Verdrahtungskontrolle" aus und gibt die Variable oder Variablen ein, welche überprüft werden sollen. Unter Ansprechen auf den gewählten Betriebsmodus "Verdrahtungskontrolle" und die eingegebenen Variablen erzeugt der Mikroprozessor 130 ein oder mehrere Steuersignale. Die Steuersignale können zyklisch oder azyklisch über den internen Bus 60' zur Auswerte- und Steuereinrichtung 120 übertragen werden. Je nach Implementierung werden die über den Bus 60' übertragenen Daten nur über die Auswerte- und Steuereinrichtung 120 den Anschlussklemmen 30'₁ bis 30'ₙ oder zusätzlich auch unmittelbar den Anschlussklemmen zugeführt. Die Auswerte-und Steuereinrichtung 120 wertet die ankommenden Steuersignale aus und veranlasst, dass die entsprechende Leuchtdiode oder entsprechenden Leuchtdioden aktiviert werden. Gleichzeitig sorgt die Auswerte- und Steuereinrichtung 120 dafür, dass keine Signale mehr über die Gruppe von Anschlusselementen, welche der aktivierten Leuchtdiode zugeordnet ist, übertragen werden können. Wird beispielsweise durch das Steuersignal nur Kanal 1 adressiert, wird lediglich die Leuchtdiode 70' angesteuert und die Verbindung zwischen dem Sensor 50' und dem Bus 60' unterbrochen.

Dank der Erfindung ist es somit möglich, eine kanalabhängige Verdrahtungskontrolle durchzuführen, ohne dass die angeschalteten Komponenten angesteuert werden.

## Patentansprüche

1. Automatisierungssystem (10) mit
einem Kommunikationsnetz (60),
einer programmierbaren Steuereinrichtung (20) und wenigstens einem modularen Busteilnehmer (30, 40), die über das Kommunikationsnetz (60) miteinander verbunden sind, wobei der wenigstens eine modulare Busteilnehmer (30) folgende Merkmale aufweist:
mehrere Gruppen (K1 bis K8) von Anschlusselementen (31, 32), wobei jeder Gruppe von Anschlusselementen ein Anzeigeelement (70 bis 105) zugeordnet ist und an jede Gruppe (K1 bis K8) von Anschlusselementen ein Sensor (50 oder Aktor angeschlossen werden kann, und eine Auswerte- und Ansteuereinrichtung, die unter Ansprechen auf eine von der programmierbaren Steuereinrichtung (20 kommende Signalisierungsinformation wenigstens ein ausgewähltes Anzeigelement (70) ansteuert;
wobei die programmierbare Steuereinrichtung (20 zum Bereitstellen einer Signalisierungsinformation ausgebildet ist, **dadurch gekennzeichnet, dass** die Auswerte- und Ansteuerungseinrichtung unter Ansprechen auf die Signalisierungsinformation die dem wenigstens einen ausgewählten Anzeigeelement zugeordnete Gruppe (K1 bis K8) von Anschlusselementen (31, 32) sperrt,
, wobei unter Sperren ein Zustand zu verstehen ist, bei dem keine Daten, gleich welcher Art, von oder zu dem an die Gruppe von Anschlusselementen angeschalteten Aktor oder Sensor übertragen werden können.

2. Automatisierungssystem nach Anspruch 1,
**dadurch gekennzeichnet, dass**
die Signalisierungsinformation eine Angabe über die Adresse wenigstens eine Gruppe (K1 bis K8) von Anschlusselementen und/oder den Anschaltort der jeweiligen Gruppe von Anschlusselementen innerhalb des Kommunikationsnetzes (60) enthält.

3. Automatisierungssystem nach Anspruch 1 oder 2,
**dadurch gekennzeichnet, dass**
der wenigstens eine modulare Busteilnehmer (30, 40) mehrere Kommunikationsklemmen (30₁ bis 30ₙ) umfasst, die jeweils wenigstens eine Gruppe von Anschlusselementen enthält.

4. Automatisierungssystem nach Anspruch 3,
**dadurch gekennzeichnet, dass**
die Signalisierungsinformation eine Angabe über die Adresse und/oder den Einbauort des modularen Busteilnehmers (30, 40) und/oder die Adresse und/oder den Einbauort der jeweiligen Kommunikationsklemme (30₁ bis 30ₙ) innerhalb des Kommunikationsnetzes (60) enthält.

5. Automatisierungssystem nach einem der vorherigen Ansprüche,
**dadurch gekennzeichnet, dass**
die programmierbare Steuereinrichtung (20) unter Ansprechen auf ein vorbestimmtes Ereignis eine Signalisierungsinformation bereitstellt.

6. Steuerungsvorrichtung (140) umfassend
- eine programmierbare Steuereinheit (130),
- einen internen Kommunikationsbus (60'),
- mehrere mit dem Kommunikationsbus (60') verbundene Gruppen (K1 bis K8) von Anschlusselementen (31', 32') zum Anschließen externer Komponenten (50'),
wobei jeder separaten Gruppe von Anschlusselementen ein Anzeigeelemente (70' bis 105') zugeordnet ist, **gekennzeichnet durch**
eine Auswerte- und Ansteuereinrichtung (120), die unter Ansprechen auf ein von der programmierbaren Steuereinheit (130) geliefertes Steuersignal wenigstens ein Anzeigeelement (70') ansteuert und die diesem Anzeigeelement zugeordneten Gruppe von Anschlusselementen sperrt,
, wobei unter Sperren ein Zustand zu verstehen ist, bei dem keine Daten, gleich welcher Art, von oder zu dem an die Gruppe von Anschlusselementen angeschalteten Aktor oder Sensor übertragen werden können.

## Claims

1. Automated system (10) comprising:
a communication network (60);
a programmable controller (20) and at least one modular bus subscriber (30, 40) which are connected together via the communication network (60), wherein the at least one modular bus subscriber (30) has the following features:
multiple groups (K1 to K8) of connecting elements (31, 32), wherein a display element (70 to 105) is associated with each group of connecting elements, and a sensor (50 or actuator can be connected to each group (K1 to K8) of connecting elements, and an evaluation and control device which controls at least one selected display element (70) in response to signalling information coming from the programmable controller (20;
wherein the programmable controller (20 is formed to provide signalling information, **characterised in that** the evaluation and control device blocks the group (K1 to K8) of connecting elements (31, 32), associated with the at least one selected display element, in response to the signalling information,
wherein blocking is understood to mean a state in which no data, irrespective of the type, can be transferred from or to the actuator or sensor connected to the group of connecting elements.

2. Automated system as claimed in Claim 1, **characterised in that** the signalling information contains an indication of the address of at least one group (K1 to K8) of connecting elements and/or the site of connection of the respective group of connecting elements within the communication network (60).

3. Automated system as claimed in Claim 1 or 2, **characterised in that** the at least one modular bus subscriber (30, 40) includes multiple communication terminals (30₁ to 30ₙ) which each contain at least one group of connecting elements.

4. Automated system as claimed in Claim 3, **characterised in that** the signalling information contains an indication of the address and/or the installation site of the modular bus subscriber (30, 40) and/or the address and/or the installation site of the respective communication terminal (30₁ to 30ₙ) within the communication network (60).

5. Automated system as claimed in any one of the preceding Claims, **characterised in that** the programmable controller (20) provides signalling information in response to a predetermined event.

6. Control arrangement (140) comprising:
- a programmable control unit (130),
- an internal communication bus (60'),
- multiple groups (K1 to K8) of connecting elements (31', 32') - said groups being connected to the communication bus (60') - for connecting external components (50'),
wherein a display element (70' to 105') is associated with each separate group of connecting elements, **characterised by**
an evaluation and control device (120) which controls at least one display element (70') in response to a control signal provided by the programmable control unit (130) and blocks the group of connecting elements associated with this display element,
wherein blocking is understood to mean a state in which no data, irrespective of the type, can be transferred from or to the actuator or sensor connected to the group of connecting elements.

## Revendications

1. Système d'automatisation (10) comprenant :
un réseau de communication (60),
un dispositif de commande (20) programmable, et
au moins un abonné de bus (30, 40) modulaire, lesquels sont reliés les uns aux autres par le réseau de communication (60), l'au moins un abonné de bus modulaire (30) présentant les caractéristiques suivantes :
plusieurs groupes (K1 à K8) d'éléments de raccordement (31, 32), un élément d'affichage (70 à 105) étant attribué à chaque groupe d'éléments de raccordement et un capteur (50) ou actionneur pouvant être raccordé à chaque groupe (K1 à K8) d'éléments de raccordement, et un dispositif d'analyse et d'actionnement, qui actionne au moins un élément d'affichage (70) sélectionné en réaction à une information de signalisation arrivant du dispositif de commande (20) programmable ;
le dispositif de commande (20) programmable étant conçu pour la mise à disposition d'une information de signalisation, **caractérisé en ce que** le dispositif d'analyse et d'actionnement bloque, en réaction à l'information de signalisation, le groupe (K1 à K8) d'éléments de raccordement (31, 32), qui est attribué à au moins un élément d'affichage sélectionné,
sachant que, par blocage, on doit entendre un état dans lequel aucune donnée, de quelque nature qu'elle soit, ne peut être transmise à partir de ou vers l'actionneur ou le capteur rattaché au groupe d'éléments de raccordement.

2. Système d'automatisation selon la revendication 1, **caractérisé en ce que** :
l'information de signalisation contient une indication concernant l'adresse d'au moins un groupe (K1 à K8) d'éléments de raccordement et/ou le lieu de rattachement du groupe respectif d'éléments de raccordement à l'intérieur du réseau de communication (60).

3. Système d'automatisation selon la revendication 1 ou 2,
**caractérisé en ce que** :
l'au moins un abonné de bus (30, 40) modulaire comprend plusieurs bornes de communication (30₁ à 30ₙ), qui contiennent à chaque fois au moins un groupe d'éléments de raccordement.

4. Système d'automatisation selon la revendication 3, **caractérisé en ce que** :
l'information de signalisation contient une indication concernant l'adresse et/ou le lieu de montage de l'abonné de bus (30, 40) modulaire et/ou l'adresse et/ou le lieu de montage de la borne de communication (30₁ à 30ₙ) respective à l'intérieur du réseau de communication (60).

5. Système d'automatisation selon l'une des revendications précédentes,
**caractérisé en ce que** :
le dispositif de commande (20) programmable met à disposition une information de signalisation en réaction à un événement prédéfini.

6. Appareil de commande (140) comprenant :
- une unité de commande (130) programmable,
- un bus de communication interne (60'),
- plusieurs groupes (K1 à K8), reliés au bus de communication (60'), d'éléments de raccordement (31', 32') pour le raccordement de composants externes (50'),
un élément d'affichage (70' à 105') étant attribué à chaque groupe séparé d'éléments de raccordement,
**caractérisé par** :
un dispositif d'analyse et d'activation (120), qui active au moins un élément d'affichage (70') en réaction à un signal de commande fourni par l'unité de commande (130) programmable et bloque le groupe, associé à cet élément d'affichage, d'éléments de raccordement,
sachant que, par blocage, on doit entendre un état dans lequel aucune donnée, de quelque nature qu'elle soit, ne peut être transmise à partir de ou vers l'actionneur ou le capteur rattaché au groupe d'éléments de raccordement.
